# EUROPÄISCHE PATENTSCHRIFT

(11) **EP 1 319 524 B1**
(45) Veröffentlichungstag und Bekanntmachung des Hinweises auf die Patenterteilung: **23.07.2008**
(21) Anmeldenummer: 02090394.4
(22) Anmeldetag: 03.12.2002
(51) Int. Cl.: B44C 5/04, B44C 1/10, D21H 27/28, B32B 27/04, D21H 21/54

(54) **Dekorfolien mit grosser Oberflächenhärte und hohen Kratz- und Abriebfestigkeiten sowie Verfahren zu deren Herstellung**
Decorative sheets having high surface hardness, high scratch and abrasion resistance and process for making them
Feuilles décoratives à haute dureté de surface et à résistance améliorée à la rayure et à l'abrasion, ainsi que leur procédé de fabrication

(30) Priorität: 12.12.2001 DE 10161093
(43) Veröffentlichungstag der Anmeldung: 18.06.2003
(73) Patentinhaber: Ackner, Friedrich, 04105 Leipzig (DE); Cassaghi, Pietro, 26027 Rivolta D'Adda (IT); Sorio, Giuseppe, 39031 Brunico (IT)
(72) Erfinder: Cassaghi, Pietro, 26027 Rivolta d'Adda (IT)
(74) Vertreter: Wablat, Wolfgang

(56) Entgegenhaltungen:
- EP-A- 0 732 449
- EP-A- 1 038 665
- WO-A-01/57315
- WO-A-02/066265
- US-A- 3 540 978
- US-A- 3 661 673
- US-A- 5 866 209
- US-A- 6 040 044

## Beschreibung

Die Erfindung betrifft Dekorfolien und/oder Filme mit großer Oberflächenhärte und hohen Kratz- und Abriebfestigkeiten sowie das Verfahren zu ihrer Herstellung, insbesondere von flexiblen Dekorfolien für den dekorativen Innenausbau einschließlich Laminatfußboden sowie kratzfester Möbeloberflächen, auf Basis von Lacksystemen. Gehärtet werden dekorative Oberflächen auf Zellulosebasis und Produkte daraus (Papier imprägniert, eingefärbt oder bedruckt, usw.).

Es ist bekannt, dass für die Erhöhung der Kratzfestigkeit und Abriebfestigkeit von Laminatbeschichtungen Aluminiumoxidpartikel (Korund) auf die Oberfläche aufgestreut werden (WO 0044576). Weiterhin ist bekannt, dass eine mit Korund gefüllte Schicht, bestehend aus Melaminharz, Cellulosefasern, Korund, Additiven und Wasser, auf einen Dekorbogen aufgebracht wird (DE 19508797 C1). Diese Verfahren verwenden Korund (Aluminiumoxid), um eine kratzfeste Oberfläche zu erhalten.

Der Nachteil dieser Verfahren besteht darin, dass das Korund auf Grund seiner großen Eigenhärte und kantigen Form zu kostenintensivem Verschleiß an Verarbeitungsmaschinen führt. Außerdem beschränken sich diese Verfahren ausschließlich auf die Herstellung von verpressbaren imprägnierten Oberflächen, wie z. B. Laminat.

Ferner ist bekannt, dass imprägnierte Laminate mit abriebfesten Oberflächen in Mehrstufenverfahren hergestellt werden können (US 5866209). Mehrere Schichten, von denen die oberste die abrasionsschützenden Teilchen enthält, werden nacheinander aufgetragen und durch Verpressen unter Hitze ausgehärtet.

Nachteil dieses Verfahrens ist, dass es beim Pressvorgang bei hohen Temperaturen zum Aufschmelzen der Imprägnier- und der Oberschicht und damit zum Ineinanderfließen beider Schicht kommt. Die abrasionsschützenden Teilchen in der Oberflächenschicht werden dadurch in die Imprägnierschicht gedrückt und sind an der Oberfläche nicht mehr wirksam.

Es ist weiterhin bekannt, dass Laminate mit erhöhter Kratzfestigkeit hergestellt werden, indem thermoplastische Mikrosphären zusammen mit Siliziumdioxid, Aluminiumoxid, in Verbindung mit so genannten Overlays, zum Einsatz kommen (US 200170007710A1).

Der Nachteil von Overlays besteht darin, dass sie nicht zu flexiblen Folien führen und durch den Mehrschichtenaufbau komplizierte und kostenintensive Verarbeitungsmaschinen zum Einsatz kommen müssen.

Bekannt ist auch, makrokristalline und einkristalline Materialien, wie Aluminiumoxid oder Siliziumdioxid in Deckschichten zu verwenden, die besonders auf Basis lösungsmittelhaltiger Bindemittelformulierungen bzw. UV-Lackformulierungen hergestellt werden (WO 01/42373).

Diese lösungsmittelhaltigen Formulierungen haben den Nachteil, dass sie speziell eingerichtete Verarbeitungsmaschinen benötigen und bei ihrer Herstellung und Verarbeitung auch Lösungsmittel zum Einsatz kommen, z. B. Xylen, Toluen, Methylisobutylketon, die gesundheitlich bedenklich sind.

Häufig machen es die verwendeten Bindemittel zudem nötig, dass das Aluminiumoxid zusätzlich mit sehr teuren Silanacrylaten bzw. Siloxanacrylaten behandelt werden muss um eine ausreichende Verteilung zu erhalten (US 6040044; EP 1038665). Außerdem werden die ebenfalls teuren Silan- bzw. Siloxanverbindungen mit anderen funktionellen Gruppen wie Amino-, Epoxy- und Mercaptogruppen zur Oberflächenbehandlung des Korunds eingesetzt. Auf Grund der großen Oberflächen der verwendeten Aluminiumoxidpartikel sind dieses Verfahren sehr kostenintensiv. Zudem bedeuten Silan- und Siloxanverbindungen wie auch monomere Acrylsäurederivate ein erhöhtes Gesundheitsrisiko während der Verarbeitung.

Der Einsatz eines Overlays, hergestellt aus einer wässrigen Melaminharzformulierung, wird in WO 01/42373 ebenfalls beschrieben.

Der Nachteil dieses Verfahrens besteht darin, dass eine unflexible, in vier Schichten aufgebaute und unflexible Dekorfolie erhalten wird. Weiterhin besteht der Nachteil der beschriebenen Verfahren dieser Patentschrift darin, dass kristalline mineralische Materialien eingesetzt werden, die auf Grund ihrer Strukturen scharfe Kanten und Spitzen besitzen und so zum Verschleiß an den Verarbeitungsmaschinen führen.

Aufgabe der Erfindung war die Entwicklung von Dekorfolien und/oder Filmen mit großer Oberflächenhärte und hohen Kratz- und Abriebfestigkeiten sowie das Verfahren ihrer Herstellung, insbesondere von flexiblen Dekorfolien für den dekorativen Innenausbau einschließlich Laminatfußböden sowie kratzfester Möbeloberflächen. Die Anforderungen an diese dekorativen Oberflächen bestand weiterhin darin, dass sie auf allen bekannten Plattenbeschichtungsanlagen, insbesondere Walzenbeschichtungsanlagen, leicht verarbeitet werden können.

Die Aufgabe wird gelöst durch Dekorfolien und/oder Filme auf Basis von Lacksystemen, bei denen
- die Lacksysteme Glaskugeln, mit geringer Eigenabrasivität
- mit einem Durchmesser von 1 µm bis 250 µm
- in Konzentrationen von 1 bis 80 Masse%, bezogen auf den Formulierungsansatz, enthalten und
- die Lacksysteme auf flexible Bedruckstoffe als Oberflächenfilme oder -schichten von 1 µm bis 250 µm aufgetragen und
- einer Trocknung und Härtung von 100 °C bis 250 °C
unterworfen worden sind.

Bevorzugt werden die Glaskugeln bzw. Glaskügelchen (auch runde Glassphären oder Mikrosphären genannt) mit einem Durchmesser von 4 µm bis 120 µm.

Die zum Einsatz gelangenden Glaskugeln sind handelsübliche Produkte (Fa. Potters Europe) und werden beispielsweise als

| |
|---|
| Spheriglas, Typ 5000, Ø 4 bis 25 µm |
| Spheriglas, Typ 3000, Ø 12 bis 48 µm und |
| Spheriglas, Typ 2429, Ø 53 bis 106 µm |

gehandelt. Je kleiner die Glaskugeln sind, umso größer ist ihre Anzahl und Oberfläche pro Gewichtseinheit.

Zweckmäßig sollten die Glaskugeln in Konzentrationen von 3 bis 50 Masse%, bezogen auf den Formulierungsansatz, enthalten sein.

Die zum Auftrag der Lacksysteme verwendeten flexiblen Bedruckstoffe können
- flexible imprägnierte oder gestrichene Papiere oder
- flexible Kunststoffe, vorzugsweise PVC, Polyethylen, Polyester, Polycarbonat, Polyurethan sowie geschäumte Kunststoffe
sein.

Die mit Kugeln veränderten filmbildenden wässrigen Lacksysteme sind vorzugsweise in Schichten von 3 µm bis 100 µm auf den Bedruckstoffen aufgetragen.

Als wässrige Lackformulierungen sind besonders solche aus Melaminharzpolyester, wässrige 2-Komponenten-Polyurethanformulierungen oder wässrige Formulierungen selbstvernetzender Acrylatbindemittel geeignet.

Das Verfahren zur Herstellung der Dekorfolien und/oder Filme mit großer Oberflächenhärte und hohen Kratz- und Abriebfestigkeiten besteht darin, dass
- in Lacksystemen Glaskugeln mit geringer Eigenabrasivität
- mit einem Durchmesser von 1 µm bis 250 µm,
- in Konzentrationen von 1 bis 80 Masse%, bezogen auf den Lackansatz,
- unter Verwendung eines Schutzkolloids eingearbeitet werden,
- die entstandenen Lacksysteme auf flexiblen Bedruckstoffen in Schichten von 1 µm bis 250 µm aufgetragen und anschließend
- bei Temperaturen von 100 °C bis 250 °C getrocknet und gehärtet werden.

Die Kugeln werden in wässrige Lackformulierungen eingearbeitet, vorzugsweise in wässrige Formulierungen aus Melaminharz-Polyester (sogenannte SH-Lacke), in wässrige 2-Komponenten-Polyurethanformulierungen, sowie wässrige Formulierungen selbstvernetzender Acrylatbindemittel. Die Einarbeitung erfolgt mit den bekannten Verfahren, wobei sowohl Rührer als auch Dissolver zum Einsatz kommen können.

Als Schutzkolloid ist besonders Polyvinylalkohol mit einem Hydrolysegrad von 70 bis 100 % geeignet.

Der Auftrag der Lackformulierungen auf die flexiblen Bedruckstoffe kann
- direkt mit rotierenden Lackauftragssystemen, vorzugsweise Rasterwalzen oder Haschur-Walzen,
- Rakelsystemen, wie spiralisierten oder nichtspiralisierten Rollrakeln oder Kastenrakeln, oder
- indirekt mit Walzenauftragssystemen erfolgen.

Die geeigneten Auftragsgeschwindigkeiten liegen bei 5 bis 300 m/min, vorzugsweise 60 bis 120 m/min.

Die Auftragsgeschwindigkeit hängt u.a. vom verwendeten System ab. Bei Lacksystemen betragen die Geschwindigkeiten im allgemeinen 50 bis 150 m/min.

Die Trocknungstemperaturen für die Lackformulierungen liegen vorzugsweise bei 120 °C bis 160 °C.

Das neue Verfahren bzw. die Verarbeitung und das Aufbringen der Materialien können mit konventionellen Maschinen bzw. Technologien durchgeführt werden, die an sich bekannt sind. Es sind keine Maschinen mit neuer Technologie für den Einsatz und die Umsetzung der Erfindung notwendig.

Die Oberflächen, welche durch diese Art von Applikationen behandelt werden, können auch nachträglich und in weiteren Verfahren nochmals mit dieser Technologie behandelt werden bzw. zusätzlich mit weiteren chemischen Produkten nachbehandelt werden. So werden zusätzliche physiochemische Eigenschaften der Oberfläche erreicht, um diese noch resistenter, härter und kratzfester zu gestalten (Mehrfachapplikationen).

Bevorzugte Anwendungsgebiete, bei denen auf Papierbasis oder Zellulosebasis die Lackfilme im Verbund die Oberfläche schützen sollen, sind
- Vorimprägnierte oder gestrichene Papier aller Grammaturen und Typen, die nachdem sie bedruckt wurden, mit Lacken und Filmen im Verbund mit Mikrokugeln geschützt werden.
- Vorimprägnierte und bedruckte Papiere, die im Möbel-und Verkleidungsbereich eingesetzt werden.
- Vorimprägnierte oder gestrichene Papiere, die in der Möbelindustrie eingesetzt werden und in anderen Einsatzgebieten verwendet werden, die auf alle mögliche Trägermaterialien aufgebracht werden und die in Produktionszyklen und in Pressen, im Niederdrucksystem, im Hochdrucksystem, in einlagigen Pressen, in Mehretagenpressen, in Rückkühlpressen, in Durchlaufpressen und in traditionellen Pressen ohne Rückkühlsystem verarbeitet werden.

Die erfindungsgemäßen Dekorfolien besitzen eine große Oberflächenhärte, sind aber immer noch sehr flexibel und lassen sich deshalb schnell und mit einfachen bekannten maschinellen Techniken auf alle starren Untergründe, wie Spanplatten, MDF-Platten, Massivholzplatten, zementgebundenen Platten, Metallplatten und ähnliche Untergründe aufkaschieren, wobei die technisch üblichen Verklebungmittel zum Einsatz kommen.

Die Erfindung wird in nachfolgenden Beispielen beschrieben, ohne darauf beschränkt zu sein.

### Beispiel 1

Herstellung der Polyvinylalkohol-Lösung

In einem 200 1 Rührgefäß werden 120 kg heißes Wasser (70 °C) unter schnellem Rühren mit 30 kg Polyvinylalkohol (Typ Lamovil 105) gemischt. Die entstandene Mischung wird so lange gerührt, bis sie vollständig homogen ist und keine festen bzw. Gelpartikel enthalten sind. Herstellung der Lackmischung 1

In einem Rührgefäß werden 40 kg eines handelsüblichen Melamin-Polyester-Lackes (SH-Lack) mit 2,5 kg

Polyvinylalkokhol-Lösung und 10 kg Glaskügelchen (Spheriglas 5000) unter Rühren zusammengegeben. Der Ansatz wird 15 min gut gerührt. Anschließend werden 3 kg Härter (wässrige p-Toluolsulfonsäure mind. 35 %ig) zugegeben. Außerdem wird 0,1 kg eines handelsüblichen Entschäumers verwendet.

Dieser Lackansatz wird mittels eines verchromten Druckzylinders (Raster 50) auf den Bedruckstoff mit einer Geschwindigkeit von 65 m/min und einer Trocknertemperatur von 140 °C aufgetragen. Durch Zusatzheizungen mit Temperaturen von 130 °C wird eine vollständige Aushärtung der Oberfläche garantiert. Der Lack wird mit einem Gewicht von 8 g/m² aufgetragen. Als Bedruckstoff wird ein weißes imprägniertes aber noch flexibles Papier (sogenanntes Vorimprägnat) mit einer Grammatur von 60 g/m² verwendet.

Das lackierte Papier ist ohne Zusatzbehandlung zur Weiterverarbeitung auf Walzenkaschieranlagen, wie sie in der Möbelindustrie geeignet sind, einsetzbar.

### Beispiel 2

Lackrezeptur und Verarbeitungsverfahren wie Beispiel 1, jedoch mit einer Lackiergeschwindigkeit von 100 m/min.

### Beispiel 3

Lackrezeptur und Verarbeitungsverfahren wie Beispiel 1, jedoch mit einem mit Holzstruktur bedrucktem Papier und einer Geschwindigkeit von 100 m/min.

### Beispiel 4

### Herstellung Lackmischung 2

In einem Rührgefäß werden 40 kg eines handelsüblichen Melamin-Polyester-Lackes (SH-Lack) mit 2,5 kg Polyvinylalkohol-Lösung und 20 kg Glaskügelchen (Spheriglas 5000) unter Rühren zusammengegeben. Der Ansatz wird 15 min gut gerührt. Anschließend werden 3 kg Härter (wässrige p-Toluolsulfonsäure mind. 35 %ig) zugegeben. Außerdem wird 0,1 kg eines handelsüblichen Entschäumers verwendet.

Dieser Lackansatz wird mittels eines verchromten Druckzylinders (Raster 50) auf den Bedruckstoff mit einer Geschwindigkeit von 80 m/min und einer Trocknertemperatur von 140 °C aufgetragen. Durch Zusatzheizungen mit Temperaturen von 130 °C wird eine vollständige Aushärtung der Oberfläche garantiert. Der Lack wird mit einem Gewicht von 9 g/m² aufgetragen. Als Bedruckstoff wird ein weißes imprägniertes aber noch flexibles Papier (sogenanntes Vorimprägnat) mit einer Grammatur von 60 g/m² verwendet.

Das lackierte Papier ist ohne Zusatzbehandlung zur Weiterverarbeitung auf Walzenkaschieranlagen, wie sie in der Möbelindustrie geeignet sind, einsetzbar.

### Beispiel 5

Lackrezeptur und Verarbeitungsverfahren wie Beispiel 4, jedoch mit einem mit Holzstruktur bedrucktem Papier und einer Geschwindigkeit von 80 m/min.

### Beispiel 6

### Herstellung Lackmischung 3

In einem Rührgefäß werden 40 kg eines handelsüblichen Melamin-Polyester-Lackes (SH-Lack) mit 2,5 kg Polyvinylalkohol-Lösung und 10 kg Glaskügelchen (Spheriglas 3000) unter Rühren zusammengegeben. Der Ansatz wird 15 min gut gerührt. Anschließend werden 3 kg Härter (wässrige p-Toluolsulfonsäure mind. 35 %ig) zugegeben. Außerdem wird 0,1 kg eines handelsüblichen Entschäumers verwendet.

Dieser Lackansatz wird mittels eines verchromten Druckzylinders (Raster 50) auf den Bedruckstoff mit einer Geschwindigkeit von 60 m/min und einer Trocknertemperatur von 140 °C aufgetragen. Durch Zusatzheizungen mit Temperaturen von 130 °C wird eine vollständige Aushärtung der Oberfläche garantiert. Der Lack wird mit einem Gewicht von 9 g/m² aufgetragen. Als Bedruckstoff wird ein weißes imprägniertes aber noch flexibles Papier (sogenanntes Vorimprägnat) mit einer Grammatur von 60 g/m² verwendet.

Das lackierte Papier ist ohne Zusatzbehandlung zur Weiterverarbeitung auf Walzenkaschieranlagen, wie sie in der Möbelindustrie geeignet sind, einsetzbar.

### Beispiel 7

Lackrezeptur und Verarbeitungsverfahren wie Beispiel 6, jedoch mit einem mit Holzstruktur (Kiefer) bedrucktem Papier und einer Geschwindigkeit von 60 m/min.

### Beispiel 8

Lackrezeptur und Verarbeitungsverfahren wie Beispiel 6, jedoch mit einem mit einer anderen Holzstruktur (Ahorn) bedrucktem Papier und einer Geschwindigkeit von 60 m/min.

### Testung der Oberflächenhärte:

Die in den Beispielen 1 bis 8 erhaltenen Erzeugnisse wurden bezüglich ihrer Oberflächenhärte wie folgt getestet:
- Abrieb Stahlwolle nach 10 Hüben (Kratzfestigkeit)
- Taber ^{R} Abraser in Anlehnung DIN 68861 (Anzahl der Umdrehungen bis 50-%igen Durchrieb Dekor)
- Ritzhärte 1 mm Stahlkugel (in Anlehnung DIN 68861)
- (Geringste Gewichtskraft in Newton, die eine in sich geschlossene Markierung hervorruft)

Zusätzlich werden die Werte für einen SH-Lack und ein Tränkharz ohne Mikrokugeln genannt.

### Ergebnisse Eigenschaften

| Beispiel | 1. Kratzfestigkeit (Abrieb Stahlwolle) | 2. Abrieb (Umdrehungen) | 3. Ritzhärte (Gewichtskraft N) |
|---|---|---|---|
| Vergleich SH-Lack ohne Mikrokugeln | kein Abrieb an Stahlwolle; Abrieb an Oberfläche, stark verletzt | 10 | 0,40 |
| Beispiel 1 | Abrieb an Stahlwolle, Lackoberfläche kaum Verletzung | 110 | 0,55 |
| Beispiel 2 | Abrieb an Stahlwolle, Lackoberfläche kaum Verletzung | 20 | 0,55 |
| Beispiel 3 | Abrieb an Stahlwolle, Lackoberfläche kaum Verletzung | 20 | 0,70 |
| Beispiel 4 | Abrieb an Stahlwolle, Lackoberfläche kaum Verletzung | 120 | 0,80 |
| Beispiel 5 | Abrieb an Stahlwolle, Lackoberfläche kaum Verletzung | - | - |
| Beispiel 6 | Abrieb an Stahlwolle, Lackoberfläche keine Verletzung | 110 | 0,60 |
| Beispiel 7 | Abrieb an Stahlwolle, Lackoberfläche keine Verletzung | 20 | 0,53 |
| Beispiel 8 | Abrieb an Stahlwolle Lackoberfläche keine Verletzung | 20 | 0,45 |
| Vergleich Tränkharz ohne Mikrokugeln | kein Abrieb an Stahlwolle, Verletzung Oberfläche | - | - |

## Patentansprüche

1. Dekorfolien und/oder Filme mit großer Oberflächenhärte and hohen Kratz- und Abriebfestigkeiten, erhältlich durch Auftragen eines wässrigen Lacksystems als Oberflächenfilm oder -schicht von 1 µm bis 250 µm auf flexible Bedruckstoffe, bestehend aus imprägniertem oder gestrichenem Papier oder aus flexiblen Kunststoffen,
wobei die Lacksysteme Glaskugeln mit geringer Eigenabrasivität mit einem Durchmesser von 1 µm bis 250 µm in Konzentrationen von 1 bis 80 Masse% bezogen auf den Formulierungsansatz
sowie ein Schutzkolloid aufweisen,
und nachfolgendem Trocknen und Härten der Lacksysteme bei 100 °C bis 250 °C.

2. Dekorfolien und/oder Filme nach Anspruch 1, **dadurch gekennzeichnet, dass** die Kugeln einen Durchmesser von 4 µm bis 120 µm haben.

3. Dekorfolien und/oder Filme nach Anspruch 1 und 2, **dadurch** erhältlich, dass die Kugeln in Konzentrationen von 3 bis 50 Masse%, bezogen auf den Formulierungsansatz, enthalten sind.

4. Dekorfolien und/oder Filme nach einem oder mehreren der Ansprüche 1 bis 3, **dadurch gekennzeichnet, dass** die flexiblen Kunststoffe vorzugsweise PVC, Polyethylen, Polyester, Polycarbonat, Polyurethan sowie geschäumte Kunststoffe sind.

5. Dekorfolien und/oder Filme nach einem oder mehreren der Ansprüche 1 bis 4, **dadurch gekennzeichnet, dass** die mit Glaskugeln veränderten filmbildenden wässrigen Lacksysteme in Schichten von 3 µm bis 100 µm auf den Bedruckstoffen aufgetragen sind.

6. Dekorfolien und/oder Filme nach einem oder mehreren der Ansprüche 1 bis 5, **dadurch gekennzeichnet, dass** als wässrige Lackformulierungen solche aus Melaminharzpolyester, wässrige 2-Komponenten-Polyurethanformulierungen oder wässrige Formulierungen selbstvernetzender Acrylatbindemittel verwendet sind.

7. Verwendung der Dekorfolien und/oder Filme nach Anspruch 1 bis 6 als flexible Dekorfolien für den dekorativen Innenausbau.

8. Verwendung der Dekorfolien und/oder Filme nach Anspruch 1 bis 7 für Laminatfußboden sowie kratzfeste Möbeloberflächen.

9. Verfahren zur Herstellung von Dekorfolien und/oder Filmen mit großer Oberflächenhärte und hohen Kratz- und Abriebfestigkeiten, **dadurch gekennzeichnet, dass**
- in wässrigen Lacksystemen Glaskugeln
- mit einem Durchmesser von 1 µm bis 250 µm,
- in Konzentrationen von 1 bis 80 Masse%, bezogen auf den Lackansatz,
- unter Verwendung eines Schutzkolloids
- eingearbeitet werden,
- die entstandenen Lacksysteme auf flexiblen Bedruckstoffen, bestehend aus imprägniertem oder gestrichenem Papier oder aus flexiblen Kunststoffen, in Schichten von 1 µm bis 250 µm aufgetragen und anschließend
- bei Temperaturen von 100 °C bis 250°C getrocknet und gehärtet werden.

10. Verfahren zur Herstellung von Dekorfolien und/oder Filmen nach Anspruch 9, **dadurch gekennzeichnet, dass** das Schutzkolloid Polyvinylalkohol mit einem Hydrolysegrad von 70 bis 100 % ist.

11. Verfahren zur Herstellung von Dekorfolien und/oder Filmen nach Anspruch 9 und 10, **dadurch gekennzeichnet, dass** der Auftrag der Lackformulierungen auf die flexiblen Bedruckstoffe
- direkt mit rotierenden Lackauftragssystemen,
- Rakelsystemen oder
- indirekt mit Walzenauftragssystemen
- mit Auftragsgeschwindigkeiten von 5 bis 300 m/min, vorzugsweise 60 bis 120 m/min, erfolgt.

12. Verfahren zur Herstellung von Dekorfolien und/oder Filmen nach Anspruch 9 bis 11, **dadurch gekennzeichnet, dass** die Lackformulierungen bei 120°C bis 160°C getrocknet und gehärtet werden.

## Claims

1. Decorative sheets and/or films with a high surface hardness and high resistance to scratching and abrasion, obtainable by the application of an aqueous paint system as a surface film or layer of 1 µm to 250 µm on flexible printing substrates, consisting of impregnated or coated paper or of flexible plastics, wherein
the paint systems have glass spheres with low self-abrasiveness with a diameter of 1 µm to 250 µm in concentrations of 1 to 80 % by mass with reference to the formulation preparation, as well as a protective colloid, and subsequent drying and hardening of the paint systems at 100° C to 250° C.

2. The decorative sheets and/or films according to Claim 1,
**characterised in that** the spheres have a diameter of 4 µm to 120 µm.

3. The decorative sheets and/or films according to Claims 1 and 2,
obtainable in that the spheres are contained in concentrations of 3 to 50 % by mass with reference to the formulation preparation.

4. The decorative sheets and/or films according to one or a plurality of the Claims 1 to 3,
**characterised in that** the flexible plastics are preferably PVCs, polyethylenes, polyesters, polycarbonates, polyurethanes or foamed plastics.

5. The decorative sheets and/or films according to one or a plurality of the Claims 1 to 4,
**characterised in that** the film-forming aqueous paint systems, modified with glass spheres, are applied in layers of 3 µm to 100 µm onto the printing substrates.

6. The decorative sheets and/or films according to one or a plurality of the Claims 1 to 5,
**characterised in that** as aqueous paint formulations, such as are of melamine resin polyester, aqueous 2-component polyurethane formulations, or aqueous formulations of self-wetting acrylate binders, are used.

7. The use of the decorative sheets and/or films according to Claim 1 to 6 as flexible decorative sheets for decorative finishes.

8. The use of the decorative sheets and/or films according to Claims 1 to 7 for laminate flooring and also for scratch-resistant furniture surfaces.

9. A method for the manufacture of decorative sheets and/or films with a high surface hardness and high resistance to scratch and abrasion;
**characterised in that**
- in aqueous paint systems glass spheres
- with a diameter of 1 µm to 250 µm,
- in concentrations of 1 to 80 % by mass with reference to the paint preparation,
- with the use of a protective colloid
- are incorporated,
- the resulting paint systems are applied to flexible printing substrates, consisting of impregnated or coated paper or of flexible plastics, in layers of 1 µm to 250 µm, and subsequently
- are dried and hardened at temperatures of 100 °C to 250 °C.

10. The method for the manufacture of decorative sheets and/or films according to Claim 9,
**characterised in that** the protective colloid is polyvinyl alcohol with a hydrolysis level of 70 to 100 %.

11. The method for the manufacture of decorative sheets and/or films according to Claims 9 and 10,
**characterised in that** the application of the paint formulations onto the flexible printing substrates takes place
- directly with rotating paint application systems,
- coating systems, or
- indirectly with roller application systems
- with application speeds of 5 to 300 m/min, preferably 60 to 120 m/min.

12. The method for the manufacture of decorative sheets and/or films according to Claims 9 to 11,
**characterised in that** the paint preparations are dried and hardened at 120 °C to 160 °C.

## Revendications

1. Feuilles décoratives et/ou films dotés d'une grande dureté surfacique et de résistances élevées au grattage et au frottement, pouvant être obtenus par application d'un système de vernis aqueux faisant office de film ou couche surfacique de 1 µm à 250 µm sur des supports d'impression souples composés de papier imprégné ou couché ou de matières plastiques souples, ces systèmes présentant des billes de verre dotées d'une faible abrasivité propre et ayant un diamètre de 1 µm à 250 µm dans des concentrations comprises entre 1 et 80 % en masse par rapport à la base de formulation
ainsi qu'un colloïde protecteur,
suivie d'un séchage et d'un durcissement des systèmes de vernis entre 100 °C et 250 °C.

2. Feuilles décoratives et/ou films selon la revendication 1, **caractérisés en ce que** les billes ont un diamètre de 4 µm à 120 µm.

3. Feuilles décoratives et/ou films selon les revendications 1 et 2, pouvant être obtenus du fait que les billes sont contenues dans des concentrations comprises entre 3 et 50 % en masse par rapport à la préparation de formulation.

4. Feuilles décoratives et/ou films selon une ou plusieurs des revendications 1 à 3, **caractérisés en ce que** les matières plastiques souples sont de préférence du PVC, du polyéthylène, du polyester, du polycarbonate, du polyuréthane ainsi que des mousses de matière plastique.

5. Feuilles décoratives et/ou films selon une ou plusieurs des revendications 1 à 4, **caractérisés en ce que** les systèmes de vernis aqueux constituant un film et modifiés par les billes de verre sont appliqués en couches de 3 µm à 100 µm sur les supports d'impression.

6. Feuilles décoratives et/ou films selon une ou plusieurs des revendications 1 à 5, **caractérisés en ce qu'**on utilise comme formulations aqueuses de vernis des formulations à base de polyester de résine mélaminée, de polyuréthane aqueux à 2 composants ou des formulations aqueuses de liants à l'acrylate auto-réticulants.

7. Utilisation de feuilles décoratives et/ou films selon les revendications 1 à 6 comme feuilles décoratives souples pour l'aménagement décoratif intérieur.

8. Utilisation de feuilles décoratives et/ou films selon les revendications 1 à 7 pour des planchers laminés et des surfaces de meubles résistant aux rayures.

9. Procédé de fabrication de feuilles décoratives et/ou films dotés d'une grande dureté surfacique et de résistances élevées au grattage et au frottement, **caractérisé en ce que**, dans
- des systèmes de vernis aqueux, sont incorporées des billes de verre
- d'un diamètre de 1 µm à 250 µm,
- dans des concentrations de 1 à 80 % en masse par rapport à la base de vernis,
- ceci en employant un colloïde protecteur,
- que les systèmes de vernis obtenus sont appliqués sur des supports d'impression souples composés de papier imprégné ou couché ou de matières plastiques souples en couches de 1 µm à 250 µm puis
- séchés et durcis à des températures de 100°C à 250 °C.

10. Procédé de fabrication de feuilles décoratives et/ou films selon la revendication 9, **caractérisé en ce que** le colloïde protecteur est de l'alcool de polyvinyle ayant un degré d'hydrolyse de 70 à 100 %.

11. Procédé de fabrication de feuilles décoratives et/ou films selon les revendications 9 et 10, **caractérisé en ce que** l'application des formulations de vernis sur les supports d'impression souples se fait
- indirectement par des systèmes rotatifs d'application de vernis,
- par des systèmes de racles ou
- indirectement par des systèmes d'application à rouleaux,
- à des vitesses d'application de 5 à 300 m/min, de préférence 60 à 120 m/min.

12. Procédé de fabrication de feuilles décoratives et/ou films selon les revendications 9 à 11, **caractérisé en ce que** les formulations de vernis sont séchées et durcies entre 120 °C et 160 °C.
